# FASCICULE DE BREVET EUROPEEN

(11) **EP 3 931 089 B1**
(45) Date de publication et mention de la délivrance du brevet: **28.12.2022**
(21) Numéro de dépôt: 20719679.1
(22) Date de dépôt: 27.02.2020
(51) Int. Cl.: B64D 13/06

(54) **SYSTÈME DE CONDITIONNEMENT D'AIR D'UNE CABINE D'AÉRONEF COMPRENANT DES MOYENS DE RÉCHAUFFAGE DE L'EAU RÉCOLTÉE PAR LA BOUCLE D'EXTRACTION D'EAU**
KLIMAANLAGE FÜR EINE FLUGZEUGKABINE MIT VORRICHTUNG ZUR WIEDERERWÄRMUNG DES VON DEM WASSEREXTRAKTIONSKREIS GESAMMELTEN WASSERS
AIR CONDITIONING SYSTEM FOR AN AIRCRAFT CABIN, COMPRISING MEANS FOR REHEATING THE WATER COLLECTED BY THE WATER EXTRACTION LOOP

(30) Priorité: 01.03.2019 FR 1902147
(43) Date de publication de la demande: 05.01.2022
(73) Titulaire: Liebherr-Aerospace Toulouse SAS, 31200 Toulouse (FR)
(72) Inventeur: GALZIN, Guillaume, 31016 TOULOUSE Cedex 2 (FR); BLARY, Jean-Raymond, 31016 TOULOUSE Cedex 2 (FR); LAVERGNE, David, 31016 TOULOUSE Cedex 2 (FR)
(74) Mandataire: Bringer IP
(86) Numéro de dépôt international: PCT/FR2020/050386
(87) Numéro de publication internationale: WO 2020/178504

(56) Documents cités:
- EP-A2- 0 019 492
- WO-A1-99/51492
- US-A- 4 014 179

## Description

### Domaine technique de l'invention

L'invention concerne un système de conditionnement d'air d'une cabine d'un véhicule de transport aérien ou ferroviaire. L'invention concerne plus particulièrement un système de conditionnement d'air comprenant une boucle d'extraction d'eau et des moyens de réchauffage de l'eau récoltée par cette boucle.

### Arrière-plan technologique

Dans tout le texte, le terme « cabine » désigne tout espace intérieur d'un véhicule de transport aérien ou ferroviaire dont la pression et/ou la température de l'air doit être contrôlée. Il peut s'agir d'une cabine pour passagers, du cockpit de pilotage d'un aéronef, d'une soute, et de manière générale de toute zone du véhicule qui nécessite un air à une pression et/ou une température contrôlée. Le terme « turbine » désigne un dispositif rotatif destiné à utiliser l'énergie cinétique de l'air pour faire tourner un arbre supportant les aubes de la turbine. Le terme « compresseur » désigne un dispositif rotatif destiné à augmenter la pression de l'air qu'il reçoit en entrée.

Un système de conditionnement d'air d'une cabine d'un véhicule de transport, tel que par exemple un aéronef, comprend de manière connue un dispositif de prélèvement d'air comprimé sur au moins un compresseur d'un moteur de l'aéronef (tel que par exemple un moteur propulsif ou un moteur auxiliaire de l'aéronef).

Un tel système de conditionnement d'air connu comprend également une turbomachine à cycle à air comprenant au moins un compresseur et une turbine couplés mécaniquement l'un à l'autre, ledit compresseur comprenant une entrée d'air reliée audit dispositif de prélèvement d'air comprimé et une sortie d'air, et ladite turbine comprenant une entrée d'air et une sortie d'air reliée à ladite cabine, pour pouvoir l'alimenter en air à pression et température contrôlées.

Selon une variante, le compresseur de la turbomachine à cycle à air est directement alimenté par de l'air ambiant prélevé à l'extérieur de l'aéronef et la compression de l'air est assurée directement par le compresseur de la turbomachine à cycle à air.

Quel que soit le mode d'alimentation en air comprimé du système, il comprend en général également au moins un échangeur de chaleur, dit échangeur principal de refroidissement, agencé dans un canal de circulation d'air dynamique prélevé à l'extérieur de l'aéronef, entre ladite sortie d'air dudit compresseur et ladite entrée d'air de ladite turbine, ledit échangeur principal comprenant un circuit primaire alimenté par un flux d'air chaud issu dudit compresseur, et un circuit secondaire alimenté par ledit air dynamique formant un flux d'air froid destiné à refroidir ledit flux d'air chaud.

Enfin, un système de conditionnement d'air comprend également en général une boucle d'extraction d'eau agencée entre ledit échangeur de chaleur principal et ladite turbine et configurée pour extraire l'eau du flux d'air chaud refroidi par ledit échangeur principal qui alimente ladite turbine.

Certains systèmes prévoient également d'agencer une conduite de distribution d'eau extraite par ladite boucle d'extraction entre ladite boucle d'extraction d'eau et des pulvérisateurs d'eau logés dans ledit canal d'air dynamique, très en amont dudit échangeur principal, et configurés pour pouvoir pulvériser cette eau extraite par ladite boucle d'extraction d'eau à contre-courant du flux d'air dynamique dudit canal d'air dynamique pour favoriser son évaporation dans le flux d'air avant que l'air ne pénètre dans l'échangeur principal de refroidissement.

Cette injection d'eau liquide sous forme de gouttelettes dans le canal de circulation d'air dynamique, désigné plus communément par les termes de canal d'air ambiant ou de canal RAM air, en amont de l'échangeur de refroidissement, permet d'abaisser la température de l'air en entrée de la passe froide de l'échangeur de refroidissement. En effet, cette eau, en s'évaporant absorbe de la chaleur et permet donc d'abaisser la température de l'air. Cette eau est en général injectée à une température de l'ordre de 20°C, qui est la température du séparateur d'eau de la boucle d'extraction d'eau.

Le document de brevet US200911784 au nom du demandeur décrit par exemple un tel système de conditionnement d'air. Un système selon ce mode de réalisation est dorénavant largement utilisé dans un certain nombre d'aéronefs.

Les inventeurs ont néanmoins cherché à améliorer un tel système de conditionnement d'air, et notamment à améliorer les performances de refroidissement de la passe chaude de l'échangeur principal de refroidissement.

Le document de brevet EP 0019 492 A2 montre aussi un système de conditionnement d'air d'une cabine d'un aéronef et divulgue le préambule de la revendication 1.

### Objectifs de l'invention

L'invention vise à fournir un système de conditionnement d'air d'une cabine d'un véhicule de transport, tel qu'un aéronef, qui permet d'améliorer les performances de refroidissement de la passe chaude de l'échangeur principal de refroidissement.

L'invention vise également à fournir, dans au moins un mode de réalisation de l'invention, un système de conditionnement d'air adapté à des canaux de circulation d'air dynamique compacts, comme par exemple ceux utilisés pour les véhicules de transport ferroviaire.

### Exposé de l'invention

Pour ce faire, l'invention concerne un système de conditionnement d'air d'une cabine d'un aéronef comprenant :
- un dispositif de prélèvement d'air sur une source d'air,
- une turbomachine à cycle à air comprenant au moins une turbine et une roue consommatrice d'énergie (18) couplées mécaniquement l'une à l'autre, ladite turbine comprenant une entrée d'air et une sortie d'air reliée à ladite cabine pour pouvoir l'alimenter en air à pression et température contrôlées ;
- au moins un échangeur de chaleur, dit échangeur principal de refroidissement, agencé dans un canal de circulation d'air dynamique prélevé à l'extérieur de l'aéronef, entre ledit dispositif de prélèvement d'air et ladite entrée d'air de ladite turbine, ledit échangeur principal comprenant un circuit primaire alimenté par un flux d'air chaud issu dudit dispositif de prélèvement d'air et un circuit secondaire alimenté par ledit air dynamique formant un flux d'air froid destiné à refroidir ledit flux d'air chaud,

- une boucle d'extraction d'eau agencée entre ledit échangeur de chaleur principal et ladite turbine et configurée pour extraire l'eau du flux d'air chaud refroidi par ledit échangeur principal qui alimente ladite turbine,
- une conduite de distribution d'eau extraite par ladite boucle d'extraction qui s'étend entre ladite boucle d'extraction d'eau et ledit canal d'air dynamique, en amont dudit échangeur principal, pour pouvoir pulvériser l'eau extraite par ladite boucle d'extraction d'eau, dite eau de pulvérisation, dans le flux d'air dynamique dudit canal d'air dynamique.

Le système de conditionnement d'air selon l'invention est caractérisé en ce qu'il comprend en outre des moyens de réchauffage de l'eau de pulvérisation agencés entre ladite boucle d'extraction d'eau et ledit canal d'air dynamique, en amont dudit échangeur principal de refroidissement, de manière à permettre une évaporation de l'eau pulvérisée dans ledit canal d'air dynamique, qui contribue à refroidir l'air dynamique dudit circuit primaire de l'échangeur principal et à favoriser le refroidissement de l'air chaud dudit circuit primaire dudit échangeur principal.

Le système de conditionnement d'air selon l'invention présente donc la particularité de réchauffer l'eau extraite par la boucle d'extraction d'eau avant de la pulvériser dans le canal d'air dynamique. En effet, les inventeurs ont réalisé que ce réchauffage de l'eau permet d'optimiser l'efficacité de l'évaporation de l'eau dans le canal d'air dynamique et donc d'abaisser la température de l'air ambiant circulant dans le canal d'air dynamique. En particulier, l'eau réchauffée par les moyens de réchauffage s'évapore plus vite dans le canal d'air dynamique, et de manière plus complète que la même eau non réchauffée, à architecture identique.

Les inventeurs ont notamment déterminé que l'eau extraite dans une boucle d'extraction d'eau est en général injectée dans le canal d'air dynamique à une température de 20°C. En prévoyant des moyens de réchauffage de cette eau extraite pour atteindre, par exemple une température de 60°C, le temps d'évaporation est divisé d'un facteur 13 de par le changement de la pression de vapeur saturante.

Avantageusement et selon l'invention, ladite turbomachine à cycle à air comprend en outre au moins un compresseur couplés mécaniquement à ladite turbine et à ladite roue consommatrice d'énergie, ledit compresseur comprenant une entrée d'air reliée audit dispositif de prélèvement d'air et une sortie d'air reliée audit échangeur principal de refroidissement, ledit circuit primaire dudit échangeur principal étant alimenté par un flux d'air chaud issu dudit compresseur.

Cette variante avantageuse permet de comprimer l'air issu du dispositif de prélèvement d'air par le compresseur de la turbomachine avant refroidissement par l'échangeur principal. En d'autres termes, cette variante de l'invention permet de disposer d'un étage de compression au sein de la turbomachine à cycle à air et donc de recevoir un air non comprimé prélevé à l'extérieur de l'aéronef ou de former un deuxième étage de compression dans le cas où l'air fourni au compresseur est déjà un air comprimé (le cas échéant, cela permet de fournir un « *boost* » en pression selon la terminologie anglaise correspondante).

Avantageusement et selon l'invention, lesdits moyens de réchauffage de l'eau de ladite conduite de distribution d'eau comprennent au moins un échangeur de chaleur, dit échangeur de pulvérisation, comprenant un circuit froid alimenté par ladite eau de ladite conduite de distribution et un circuit chaud alimenté par une source de fluide chaud.

Selon cette variante avantageuse, l'eau extraite par la boucle d'extraction d'eau traverse un échangeur, dit échangeur de pulvérisation, qui est configuré pour pouvoir assurer des échanges thermiques entre une passe froide alimentée par l'eau extraite par la boucle d'extraction d'eau, et une passe chaude alimentée par une source de fluide chaud.

Avantageusement et selon cette variante, ledit circuit de fluide chaud dudit échangeur de pulvérisation est un circuit de carburant, un circuit d'huile, un circuit d'un fluide caloporteur ou un circuit d'air de l'aéronef.

Selon cette variante avantageuse, la source de fluide chaud qui alimente l'échangeur de pulvérisation est soit un circuit de carburant, soit un circuit d'huile, soit un circuit d'un fluide caloporteur, soit un circuit d'air de l'aéronef. En particulier, un aéronef comprend de nombreux circuits de fluide présentant des températures supérieures à la température de l'eau extraite par la boucle d'extraction d'eau, qui est en général voisine des 20°C. Ainsi, tout circuit de fluide présentant une température supérieure à la température de l'eau récoltée par la boucle d'extraction d'eau, peut former la passe chaude de l'échangeur de pulvérisation.

Avantageusement et selon cette variante, dans le cas où le circuit de fluide chaud de l'échangeur de pulvérisation est un circuit d'air de l'aéronef, ce circuit d'air est avantageusement le circuit d'air primaire de l'échangeur principal.

Cette variante avantageusement permet de refroidir davantage la passe chaude de l'échangeur principal en utilisant le circuit d'eau de l'échangeur de pulvérisation comme une passe froide de refroidissement de la passe chaude de l'échangeur principal.

Cette variante présente donc un double avantage de pouvoir refroidir la passe froide de l'échangeur principal en pulvérisant de l'eau réchauffée en entrée de l'échangeur et de sous-refroidir la passe chaude de l'échangeur principal par le biais de l'échangeur de pulvérisation.

Selon une autre variante, les moyens de réchauffage de l'eau comprennent une résistance électrique ou un système de pompe à chaleur ou un système à effet Peltier. D'une manière générale, tout type de moyen configuré pour réchauffer une eau peut être mis en œuvre dans le cadre de l'invention pour assurer le réchauffage de l'eau

Avantageusement et selon l'invention, ledit échangeur de pulvérisation est intégré au sein dudit échangeur principal de refroidissement.

Selon cette variante avantageuse, l'échangeur de pulvérisation et l'échangeur principal de refroidissement sont formés d'un seul tenant.

Cette variante avantageuse permet notamment de concevoir un canal d'air dynamique plus court en limitant l'espace nécessaire pour prévoir la pulvérisation de l'eau dans le canal d'air. Un tel circuit d'air dynamique plus court est notamment adapté aux véhicules ferroviaires.

Avantageusement et selon l'invention, ledit échangeur principal de refroidissement comprend :
- une pluralité de canaux superposés de circulation dudit air froid, dits canaux secondaires, s'étendant chacun selon une même direction, dite direction secondaire, entre une entrée d'air, dite entrée d'air secondaire, et une sortie d'air, dite sortie d'air secondaire,
- une pluralité de canaux de circulation dudit air chaud, dits canaux primaires, intercalés chacun entre deux canaux secondaires et s'étendant selon une même direction, dite direction primaire, distincte de ladite direction secondaire, entre une entrée d'air, dite entrée d'air primaire, et une sortie d'air, dite sortie d'air primaire, de manière à permettre des échanges thermiques entre l'air primaire desdits canaux primaires et l'air secondaire desdits canaux secondaires,
- des canaux de circulation d'eau, s'étendant chacun adjacent à un canal secondaire selon ladite direction secondaire au voisinage des sorties d'air primaire entre une entrée d'eau reliée fluidiquement à ladite conduite de distribution d'eau et une sortie d'eau de manière à permettre le réchauffement de cette eau par échanges thermiques avec ledit flux d'air primaire desdits canaux primaires,
- des barres creuses micro-perforées de pulvérisation d'eau, s'étendant chacune adjacente à un canal primaire selon ladite direction primaire, entre une entrée d'eau reliée fluidiquement à au moins une sortie d'eau desdits canaux de circulation d'eau et des micro-perforations de pulvérisation d'eau débouchant vers les entrées d'air secondaire de manière à permettre une évaporation de l'eau réchauffée pulvérisée en entrée desdits canaux secondaires qui contribue ainsi à refroidir le flux d'air secondaire en entrée de l'échangeur.

Avantageusement et selon l'invention, ladite boucle d'extraction d'eau comprend :
- un condenseur comprenant un circuit primaire d'air alimenté par le flux d'air en sortie dudit échangeur principal de refroidissement, en interaction thermique avec un circuit secondaire d'air alimenté par un flux d'air issu de ladite turbine, pour permettre une condensation dudit flux d'air dudit circuit primaire,
- un extracteur d'eau agencé en sortie dudit condenseur et configuré pour pouvoir récupérer l'eau condensée par le condenseur et la délivrer à ladite conduite de distribution d'eau.

La boucle d'extraction selon cette variante de l'invention est destinée à assécher l'air avant son injection dans la turbine de la turbomachine à cycle à air pour être détendu et distribué vers la cabine de l'aéronef (par l'intermédiaire d'une chambre de mélange).

Avantageusement et selon l'invention, il comprend en outre un réchauffeur comprenant un circuit primaire d'air alimenté par ledit circuit primaire d'air dudit échangeur principal de refroidissement et alimentant ledit circuit primaire d'air dudit condenseur, en interaction thermique avec un circuit secondaire alimenté par l'air issu dudit extracteur d'eau de manière à permettre de réchauffer l'air comprimé alimentant le circuit primaire dudit réchauffeur.

Cette variante avantageuse permet d'augmenter la température de l'air qui alimente la turbine de la machine à cycle à air, ce qui permet de vaporiser les éventuelles gouttes d'eau non captées par l'extracteur d'eau et protège donc la turbine tout en contribuant à améliorer les performances de la turbine de détente de la turbomachine à cycle à air.

Avantageusement et selon l'invention, ledit dispositif de prélèvement d'air comprimé sur un moteur de l'aéronef est un dispositif de prélèvement d'air sur un moteur propulsif de l'aéronef ou un dispositif de prélèvement sur un moteur auxiliaire de l'aéronef.

Comme indiqué précédemment, rien n'empêche selon une autre variante d'alimenter directement le compresseur de la turbomachine à cycle à air par un air ambiant prélevé directement à l'extérieur du véhicule par le biais d'une écope et/ou de prévoir un compresseur intermédiaire agencé entre l'écope de prélèvement et le compresseur de la turbomachine à cycle à air, le cas échéant.

L'invention concerne également un véhicule de transport aérien ou ferroviaire comprenant une cabine et un système de conditionnement d'air de cette cabine, caractérisé en ce que ledit système de conditionnement d'air de la cabine est un système selon l'invention.

Les avantages et effets d'un système de conditionnement d'air selon l'invention s'appliquent *mutatis mutandis* à un véhicule de transport aérien ou ferroviaire selon l'invention.

L'invention concerne également un système de conditionnement d'air et un véhicule caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de conditionnement d'air selon un mode de réalisation de l'invention,
[Fig. 2] est une vue schématique d'un système de conditionnement d'air selon un autre mode de réalisation de l'invention,
[Fig. 3] est une vue schématique en perspective d'un échangeur principal de refroidissement d'un système de conditionnement d'air selon un mode de réalisation de l'invention,
[Fig. 4] est une vue schématique d'un détail de l'échangeur principal de refroidissement de la figure 3,
[Fig. 5] est une vue schématique en perspective d'un aéronef selon un mode de réalisation selon l'invention.

### Description détaillée d'un mode de réalisation de l'invention

Sur les figures, les échelles et les proportions ne sont pas strictement respectées et ce, à des fins d'illustration et de clarté. En outre, les éléments identiques, similaires ou analogues sont désignés par les mêmes références dans toutes les figures.

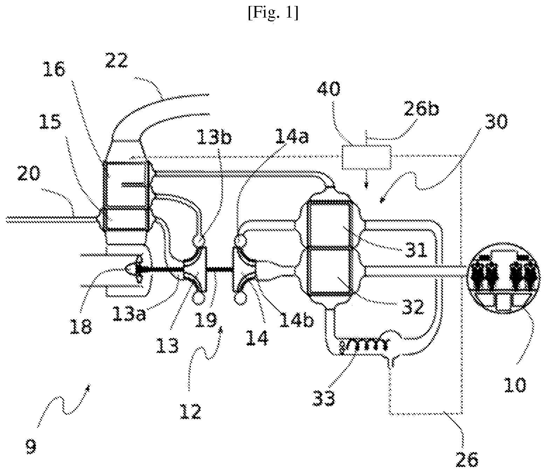

La figure 1 illustre de manière schématique un système 9 de conditionnement d'air d'une cabine 10 d'un aéronef 8 comprenant une turbomachine 12 à cycle à air comprenant un compresseur 13 et une turbine 14 de détente couplés mécaniquement l'un à l'autre par un arbre mécanique 19. Cet arbre mécanique 19 entraine également un ventilateur 18 qui forme une roue consommatrice d'énergie, dont le rôle est décrit ultérieurement.

Le compresseur 13 comprend une entrée d'air 13a reliée à un dispositif de prélèvement d'air sur une source d'air non représenté sur les figures à des fins de clarté par l'intermédiaire d'un échangeur primaire de refroidissement, aussi désigné par les termes d'échangeur PHX 15 dans toute la suite (pour *Primary Heat Exchanger* en langue anglaise), et d'une conduite 20 reliant fluidiquement le dispositif de prélèvement d'air et l'échangeur PHX 15.

En d'autres termes, l'air issu du dispositif de prélèvement d'air, qui est par exemple un dispositif de prélèvement d'air sur un compresseur d'un moteur propulsif de l'aéronef ou un dispositif de prélèvement d'air sur un compresseur d'un moteur auxiliaire de l'aéronef, voire un dispositif de prélèvement d'air sur une écope de l'aéronef associée ou non à un compresseur intermédiaire, alimente le compresseur 13 de la turbomachine à cycle à air 12 après passage dans un échangeur primaire PHX 15. Cet échangeur PHX15 comprend une passe chaude formée par l'air délivré par le dispositif de prélèvement d'air par l'intermédiaire de la conduite 20 et une passe froide alimentée par un air à pression dynamique, qui circule dans un canal de 22 de circulation d'un air dynamique, dit ci-après canal d'air dynamique.

La circulation d'air dynamique dans le canal 22 d'air dynamique est assurée par le ventilateur 18 monté sur l'arbre 18 de la turbomachine à cycle à air qui s'étend jusque dans le canal 22 d'air dynamique. Selon d'autres variantes, le ventilateur 18 peut être disjoint de l'arbre 19 et entrainé en rotation par un moteur électrique indépendant.

Le compresseur 13 comprend également une sortie d'air 13b reliée fluidiquement à un échangeur principal de refroidissement, aussi désigné par l'acronyme MHX 16 dans toute la suite (pour *Main Heat Exchanger* en langue anglaise), qui est agencé dans le canal 22 de circulation d'air dynamique prélevé à l'extérieur de l'aéronef.

Cet échangeur MHX 16 comprend un circuit primaire chaud alimenté par le flux d'air issu du compresseur 13 et un circuit secondaire froid, en interaction thermique avec le circuit primaire, alimenté par l'air dynamique circulant dans le canal 22 d'air dynamique. En d'autres termes, l'air issu du compresseur 13 est refroidi, dans l'échangeur MHX 16, par l'air dynamique circulant dans le canal 22 de circulation d'air dynamique.

La turbine 14 de détente de la turbomachine à cycle à air 12 comprend une entrée d'air 14a alimentée par l'air issu de l'échangeur MHX 16 après passage par une boucle 30 d'extraction d'eau, qui sera décrite ci-après, et une sortie d'air 14b reliée à ladite cabine 10, pour pouvoir l'alimenter en air à pression et température contrôlées.

La boucle d'extraction d'eau 30 comprend, selon le mode de réalisation des figures, un réchauffeur 31 comprenant un circuit primaire d'air alimenté par l'air issu de l'échangeur principal MHX 16, en interaction thermique avec un circuit secondaire alimenté par l'air issu d'un extracteur 33 d'eau et destiné à alimenter l'entrée 14a de la turbine de détente.

La boucle d'extraction d'eau 30 comprend également un condenseur 31 comprenant un circuit primaire d'air alimenté par le flux d'air en sortie du réchauffeur 31, en interaction thermique avec un circuit secondaire d'air alimenté par le flux d'air issu de la turbine 14 de détente, pour permettre une condensation du flux d'air du circuit primaire.

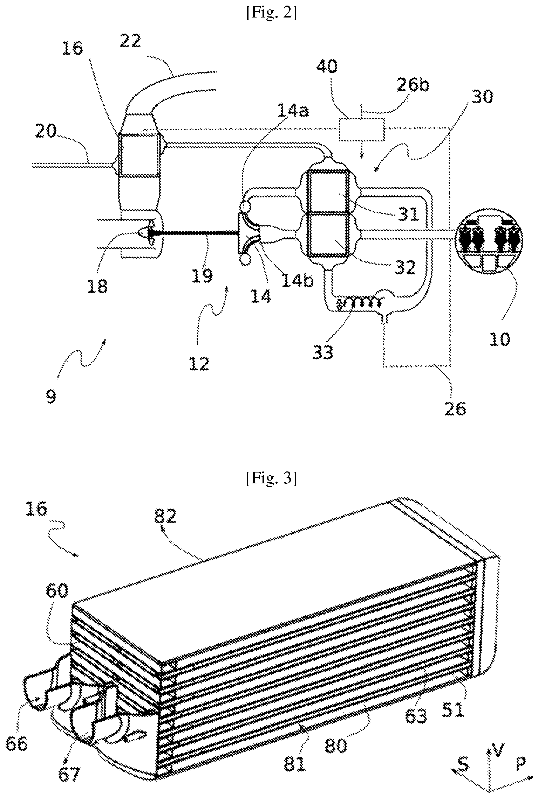

Enfin, la boucle d'extraction d'eau comprend également un extracteur d'eau 33 agencé en sortie du condenseur 32 et configuré pour pouvoir récupérer l'eau condensée par le condenseur et la délivrer à une conduite 26 de distribution d'eau, représentée schématiquement en pointillés sur les figures 1 et 2.

Cette conduite 26 de distribution d'eau, aussi désignée dans tout le texte par les termes de conduite de pulvérisation, s'étend entre l'extracteur 33 d'eau et le canal 22 d'air dynamique, en amont de l'échangeur principal MHX 16, pour pouvoir pulvériser l'eau récupérée par l'extracteur d'eau 33 dans le flux d'air dynamique du canal 22 d'air dynamique.

La figure 2 illustre un autre mode de réalisation de l'invention. La principale différence par rapport au mode de réalisation de la figure 1 concerne la turbomachine 12 à cycle à air. Sur la figure 2, la turbomachine 12 comprend uniquement la turbine 14 de détente et le ventilateur 18 montés sur l'arbre 19. En d'autres termes, selon ce mode de réalisation, la turbomachine 12 ne comprend pas de compresseur monté sur l'arbre mécanique 19. En outre et selon ce mode de réalisation, l'air issu du dispositif de prélèvement d'air, non représenté sur les figures, alimente directement l'échangeur principal MHX16 par la conduite 20 (qui ne relie donc plus le dispositif de prélèvement d'air et l'échangeur PHX 15 comme pour le mode de réalisation de la figure 1, mais directement l'échangeur principal MHX16). Ce mode de réalisation est donc également dépourvu d'un échangeur primaire PHX15. L'air qui alimente l'échangeur principal MHX16 est donc, selon ce mode de réalisation, un air déjà comprimé. Cet air est par exemple un air prélevé sur un moteur propulsif d'un aéronef ou un air traité par un compresseur amont.

Quel que soit le mode de réalisation considéré (turbomachine avec compresseur ou sans compresseur), le système de conditionnement d'air selon l'invention comprend également des moyens 40 de réchauffage de l'eau de pulvérisation circulant dans la conduite 26 de pulvérisation. Ces moyens 40 de réchauffage de l'eau de pulvérisation sont formés, par exemple et tel que représenté sur la figure 1, d'un échangeur de chaleur, dit échangeur de pulvérisation, comprenant un circuit froid alimenté par l'eau de la conduite 26 de pulvérisation et un circuit chaud 26b transverse alimenté par une source de fluide chaud. Ce circuit chaud 26b peut être de tout type. Il peut par exemple s'agir d'une dérivation d'un circuit de carburant alimentant un moteur propulsif de l'aéronef, ou une dérivation d'un circuit d'huile de lubrification d'une pièce moteur de l'aéronef ou une dérivation d'un circuit d'air du système de conditionnement d'air de l'aéronef. Tout type d'échangeur de chaleur d'un fluide chaud et d'un fluide froid liquide peut être mis en œuvre pour former les moyens 40 de réchauffage de l'eau de pulvérisation.

D'une manière générale, ce circuit chaud peut être choisi en fonction de l'architecture du système de conditionnement d'air et de la facilité de détourner un circuit chaud pour former la passe chaude de l'échangeur de pulvérisation.

La présence d'un tel échangeur de pulvérisation sur la conduite 26 de pulvérisation permet donc de réchauffer l'eau circulant dans la conduite 26 de pulvérisation et donc d'optimiser l'efficacité de l'évaporation de l'eau dans le canal 22 d'air dynamique. Cela contribue notamment à permettre d'abaisser la température de l'air ambiant circulant dans le canal 22 d'air dynamique et donc d'améliorer le refroidissement de l'air issu du compresseur 13 qui forme la passe chaude de l'échangeur MHX 16. L'eau réchauffée par les moyens 40 de réchauffage s'évapore plus vite et totalement dans le canal 22 d'air dynamique.

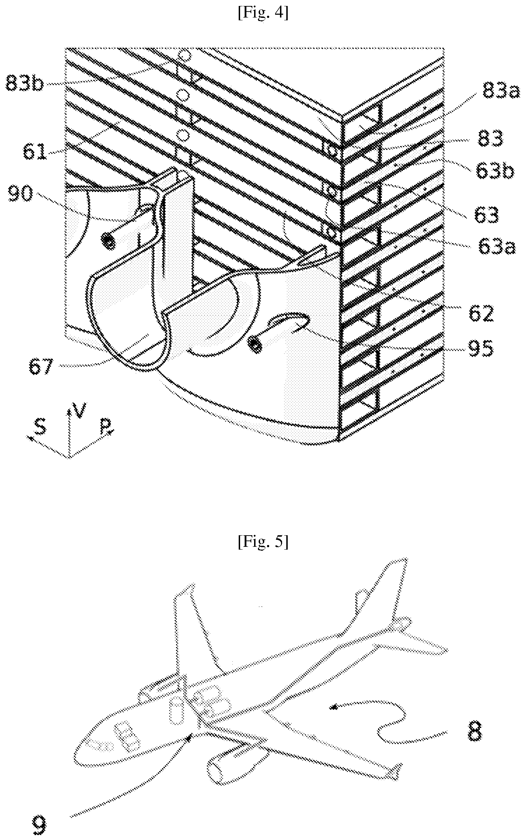

Selon un mode de réalisation particulier et tel que représenté sur les figures 3 et 4, les moyens 40 de réchauffage sont intégrés à l'échangeur MHX 16.

Pour ce faire, l'échangeur MHX16 comprend une pluralité de plaques 51 parallèles superposées les unes aux autres et qui définissent entre elles alternativement des canaux primaires 60 et des canaux secondaires 80, c'est-à-dire que chaque canal primaire 60 est imbriqué entre deux canaux secondaires 80. De préférence, le premier canal en partant du bas de l'échangeur est un canal secondaire 80, superposé d'un canal primaire 60 transverse, superposé d'un deuxième canal secondaire 80, superposé d'un deuxième canal primaire transverse, et ainsi de suite jusqu'au dernier canal, qui est de préférence également un canal secondaire. Bien entendu, l'ordre de superposition des canaux peut être différent sans changer le principe de l'invention.

Chaque canal primaire 60 présente, selon le mode de réalisation des figures 3 et 4, une forme générale de U et s'étend entre une entrée d'air primaire 61 et une sortie d'air primaire 62. Chaque branche du U s'étend selon une direction primaire P tel que représenté sur les figures 3 et 4 par le trièdre (P, S, V) où P représente la direction primaire, S représente la direction secondaire et V représente la verticale définie par la gravité.

Chaque canal secondaire 80 s'étend entre une entrée d'air secondaire 81 et une sortie d'air secondaire 82 selon la direction secondaire S.

En d'autres termes, les canaux primaires 60 et les canaux secondaires 80 sont globalement perpendiculaires entre eux et imbriqués par paire de manière à former des zones d'échanges thermiques à chaque interface d'un canal secondaire et d'une branche du canal primaire.

Chaque canal primaire 60 est en outre délimité par des barres de fermeture 63, aussi désignées par les termes de barres de fermeture primaire, qui relient les plaques parallèles 51 entre elles et s'étendent de chaque côté du canal primaire 60 le long de la direction primaire P.

Chaque canal secondaire 80 est également délimité par des barres de fermeture 83, aussi désignées par les termes de barres de fermeture secondaire, qui relient les plaques parallèles entre elles et s'étendent de chaque côté du canal 80 secondaire, le long de la direction secondaire S.

Les barres de fermeture primaire 63 s'étendent entre une entrée d'eau primaire 63a et des orifices 63b de pulvérisation d'eau. En outre, chaque barre de fermeture primaire 63 comprend un canal interne qui s'étend selon la direction primaire P en ouvrant sur l'entrée d'eau 63a et reliant fluidiquement les micro-perforations formées par les orifices 63b de pulvérisation. Ainsi, l'eau qui alimente l'entrée 63a des barres de fermeture 63 est pulvérisée par les orifices 63b de pulvérisation dans le flux d'air qui alimente les canaux secondaires 80.

Les barres de fermeture secondaire 83 s'étendent entre une entrée d'eau secondaire 83a et une sortie d'eau secondaire 83b. Les barres de fermeture 83 sont agencées au voisinage des sorties d'air primaire 62 de telle sorte que l'eau qui alimente l'entrée 83a de chaque barre de fermeture est réchauffée par l'air qui circule dans les canaux primaires 60.

L'échangeur selon le mode de réalisation des figures comprend en outre un collecteur d'eau 90 dans lequel débouchent les sorties 83b de toutes les barres de fermeture secondaires 83.

L'échangeur selon le mode de réalisation des figures comprend également un distributeur d'eau 95 qui est relié fluidiquement au collecteur d'eau 90 par un tuyau non représenté sur les figures à des fins de clarté et qui débouche dans les entrées d'eau 63a des barres de fermeture primaires 63.

Ainsi, toute l'eau collectée par le collecteur 90 et réchauffée par les échanges thermiques entre les barres de fermeture secondaire 83 et les canaux primaires 60 est distribuée dans les barres de fermeture primaire 63 de telle sorte que cette eau réchauffée puisse être pulvérisée dans le flux d'air secondaire qui alimente l'échangeur.

L'échangeur selon ce mode de réalisation comprend également une entrée commune d'air primaire 66 débouchant dans les entrées d'air primaires 61 des canaux primaires 60 et une sortie d'air commune d'air primaire 67 dans laquelle débouchent les sorties d'air primaire 62 des canaux primaires 60.

Le principe général de fonctionnement de l'échangeur 16 est donc le suivant. De l'air chaud issu d'un dispositif de prélèvement d'air d'un aéronef alimente l'entrée 66 de l'échangeur. Cet air chaud est ensuite distribué aux canaux primaires 60. Au sein de chaque canal 60 en forme de U, l'air chaud circule dans une branche du U le long de la direction primaire P, fait demi-tour par une tubulure arrondie reliant les deux branches parallèles du U, puis circule en sens inverse le long de la direction primaire P pour déboucher dans la sortie d'air 62 qui alimente la sortie commune d'air primaire 67.

En outre, de l'air froid, issu d'un prélèvement d'air à l'extérieur de l'aéronef, alimente les entrées d'air 81 des canaux primaires 80. Cet air circule dans les canaux secondaires 80 qui s'étendent le long de la direction secondaire S pour ressortir par les sorties 82.

Les canaux primaires 60 étant imbriqués avec les canaux secondaires 80, des échanges thermiques ont lieu entre le flux d'air chaud et le flux d'air froid de telle sorte que le flux d'air qui sort de la sortie commune 67 est refroidi par rapport à l'air en entrée.

En parallèle, de l'eau est injectée dans les entrées 83a des barres de fermeture secondaire. Cette eau est issue d'une boucle d'extraction d'eau d'un système de conditionnement d'air comme illustré schématiquement sur les figures 1 et 2.

Cette eau est réchauffée par des échanges thermiques entre les barres de fermeture secondaire et le flux d'air primaire. Cette eau réchauffée est récoltée par le collecteur d'eau 90 qui est relié au distributeur d'eau 95. Cette eau réchauffée est donc pulvérisée dans le flux d'air froid qui alimente les canaux secondaires 80.

Cette augmentation de température de l'eau permet donc d'accélérer le temps d'évaporation et donc de limiter le trajet nécessaire entre la pulvérisation d'eau et l'entrée de l'échangeur.

Un système de conditionnement d'air selon ce mode de réalisation est donc particulièrement efficace dans la mesure où il permet un meilleur refroidissement de l'air tout en limitant fortement l'encombrement du système.

## Revendications

1. Système de conditionnement d'air d'une cabine (10) d'un aéronef comprenant :
- un dispositif de prélèvement d'air sur une source d'air,
- une turbomachine (12) à cycle à air comprenant au moins une turbine (14) et une roue consommatrice d'énergie (18) couplées mécaniquement l'une à l'autre, ladite turbine (14) comprenant une entrée d'air (14a) et une sortie d'air (14b) reliée à ladite cabine (10) pour pouvoir l'alimenter en air à pression et température contrôlées ;
- au moins un échangeur de chaleur, dit échangeur principal (16) de refroidissement, agencé dans un canal (22) de circulation d'air dynamique prélevé à l'extérieur de l'aéronef, entre ledit dispositif de prélèvement d'air et ladite entrée d'air (14a) de ladite turbine (14), ledit échangeur principal (16) comprenant un circuit primaire alimenté par un flux d'air chaud issu dudit dispositif de prélèvement d'air, et un circuit secondaire alimenté par ledit air dynamique formant un flux d'air froid destiné à refroidir ledit flux d'air chaud,
- une boucle (30) d'extraction d'eau agencée entre ledit échangeur principal (16) et ladite turbine (14) et configurée pour extraire l'eau du flux d'air chaud refroidi par ledit échangeur principal (16) qui alimente ladite turbine (14),
- une conduite (26) de distribution d'eau extraite par ladite boucle (30) d'extraction qui s'étend entre ladite boucle (30) d'extraction d'eau et ledit canal (22) d'air dynamique, en amont dudit échangeur principal (16), pour pouvoir pulvériser l'eau extraite par ladite boucle (30) d'extraction d'eau, dite eau de pulvérisation, dans le flux d'air dynamique dudit canal (22) d'air dynamique, **caractérisé en ce qu'**il comprend en outre des moyens (40) de réchauffage de l'eau de pulvérisation agencés entre ladite boucle (30) d'extraction d'eau et ledit canal (22) d'air dynamique, en amont dudit échangeur principal (16) de refroidissement, de manière à permettre une évaporation de l'eau pulvérisée dans ledit canal (22) d'air dynamique, qui contribue à refroidir l'air dynamique dudit circuit primaire de l'échangeur principal (16) et à favoriser le refroidissement de l'air chaud dudit circuit primaire dudit échangeur principal (16).

2. Système de conditionnement d'air selon la revendication 1, **caractérisé en ce que** ladite turbomachine (12) à cycle à air comprend en outre au moins un compresseur (13) couplés mécaniquement à ladite turbine (14) et à ladite roue consommatrice d'énergie (18), ledit compresseur (13) comprenant une entrée d'air (13a) reliée audit dispositif de prélèvement d'air et une sortie d'air (13b) reliée audit échangeur principal (16) de refroidissement, ledit circuit primaire dudit échangeur principal étant alimenté par un flux d'air chaud issu dudit compresseur (13).

3. Système selon l'une des revendications 1 ou 2, **caractérisé en ce que** lesdits moyens (40) de réchauffage de l'eau de ladite conduite (26) de distribution d'eau comprennent au moins un échangeur de chaleur, dit échangeur de pulvérisation, comprenant un circuit froid alimenté par ladite eau de ladite conduite de distribution et un circuit chaud (26b) alimenté par une source de fluide chaud.

4. Système selon la revendication 3, **caractérisé en ce que** ledit circuit de fluide chaud dudit échangeur de pulvérisation est un circuit de carburant, un circuit d'huile, un circuit d'un fluide caloporteur ou un circuit d'air de l'aéronef.

5. Système selon la revendication 4, dans lequel ledit circuit de fluide chaud dudit échangeur de pulvérisation est un circuit d'air de l'aéronef, **caractérisé en ce que** ce circuit d'air est le circuit d'air primaire dudit échangeur principal.

6. Système selon l'une des revendications 1 à 5, **caractérisé en ce que** ledit échangeur de pulvérisation est intégré au sein dudit échangeur principal (16) de refroidissement.

7. Système de conditionnement d'air selon la revendication 6, **caractérisé en ce que** ledit échangeur principal (16) de refroidissement comprend :
- une pluralité de canaux superposés de circulation dudit air froid, dits canaux secondaires (80), s'étendant chacun selon une même direction, dite direction secondaire (P), entre une entrée d'air, dite entrée d'air secondaire (81), et une sortie d'air, dite sortie d'air secondaire (82),
- une pluralité de canaux de circulation dudit air chaud, dits canaux primaires (60), intercalés chacun entre deux canaux secondaires (80) et s'étendant selon une même direction, dite direction primaire (P), distincte de ladite direction secondaire, entre une entrée d'air, dite entrée d'air primaire (61), et une sortie d'air, dite sortie d'air primaire (62), de manière à permettre des échanges thermiques entre l'air primaire desdits canaux primaires (60) et l'air secondaire desdits canaux secondaires (80),
- des canaux de circulation d'eau (83), s'étendant chacun adjacent à un canal secondaire (80) selon ladite direction secondaire (P) au voisinage des sorties d'air primaire (62) entre une entrée d'eau (83a) reliée fluidiquement à ladite conduite (26) de distribution d'eau et une sortie d'eau (83b) de manière à permettre le réchauffement de cette eau par échanges thermiques avec ledit flux d'air primaire desdits canaux primaires (60),
- des barres creuses micro-perforées (63) de pulvérisation d'eau, s'étendant chacune adjacente à un canal primaire (60) selon ladite direction primaire (P), entre une entrée d'eau (63a) reliée fluidiquement à au moins une sortie d'eau (83b) desdits canaux de circulation d'eau (83) et des micro-perforations (63b) de pulvérisation d'eau débouchant vers les entrées d'air secondaire (81) de manière à permettre une évaporation de l'eau réchauffée pulvérisée en entrée desdits canaux secondaires (80) qui contribue ainsi à refroidir le flux d'air secondaire en entrée de l'échangeur.

8. Système selon l'une des revendications 1 à 7, **caractérisé en ce que** ladite boucle (30) d'extraction d'eau comprend :
- un condenseur (32) comprenant un circuit primaire d'air alimenté par le flux d'air en sortie dudit échangeur principal (16) de refroidissement, en interaction thermique avec un circuit secondaire d'air alimenté par un flux d'air issu de ladite turbine, pour permettre une condensation dudit flux d'air dudit circuit primaire,
- un extracteur (33) d'eau agencé en sortie dudit condenseur (32) et configuré pour pouvoir récupérer l'eau condensée par le condenseur et la délivrer à ladite conduite (26) de distribution d'eau.

9. Système selon la revendication 8, **caractérisé en ce qu'**il comprend en outre un réchauffeur (31) comprenant un circuit primaire d'air alimenté par ledit circuit primaire d'air dudit échangeur principal (16) de refroidissement et alimentant ledit circuit primaire d'air dudit condenseur (32), en interaction thermique avec un circuit secondaire alimenté par l'air issu dudit extracteur d'eau de manière à permettre de réchauffer l'air comprimé alimentant le circuit primaire dudit réchauffeur.

10. Système de conditionnement d'air selon l'une des revendications 1 à 9, **caractérisé en ce que** ledit dispositif de prélèvement d'air est un dispositif de prélèvement d'air sur un moteur propulsif de l'aéronef ou un dispositif de prélèvement d'air sur un moteur auxiliaire de l'aéronef.

11. Système de conditionnement d'air selon l'une des revendications 1 à 10, **caractérisé en ce que** ladite roue consommatrice d'énergie (18) est un ventilateur configuré pour permettre la circulation d'air dynamique dans ledit canal (22) de circulation d'air dynamique.

12. Véhicule de transport aérien (8) ou ferroviaire comprenant une cabine (10) et un système (9) de conditionnement d'air de cette cabine, **caractérisé en ce que** ledit système (9) de conditionnement d'air de la cabine est un système selon l'une des revendications 1 à 11.

## Patentansprüche

1. Klimatisierungssystem für eine Flugzeugkabine (10), welches umfasst:
eine Vorrichtung zur Entnahme von Luft aus einer Luftquelle;
ein Luftturbinentriebwerk (12), das mindestens eine Turbine (14) und ein Energie verbrauchendes Rad (18) umfasst, die mechanisch miteinander gekoppelt sind, wobei die Turbine (14) einen Lufteinlass (14a) und einen Luftauslass (14b) umfasst, der mit der Kabine (10) verbunden ist, um die Kabine mit Luft mit einem geregelten Druck und einer geregelten Temperatur versorgen zu können;
mindestens einen Wärmetauscher, der als Hauptkühltauscher (16) bezeichnet wird und in einem Kanal (22) für die Zirkulation von Stauluft, die von außerhalb des Flugzeugs kommt, zwischen der Luftentnahmevorrichtung und dem Lufteinlass (14a) der Turbine (14) angeordnet ist, wobei der Hauptkühltauscher (16) einen Primärkreislauf, der mit einem Strom heißer Luft aus der Luftentnahmevorrichtung gespeist wird, und einen Sekundärkreislauf umfasst, der mit der Stauluft gespeist wird, die einen Strom kalter Luft zur Kühlung des Stroms heißer Luft bildet;
einen Wasserentnahmekreislauf (30), der zwischen dem Hauptkühltauscher (16) und der Turbine (14) angeordnet ist und ausgestaltet ist, Wasser aus dem durch den Hauptkühltauscher (16) gekühlten Heißluftstrom zu entnehmen, der die Turbine (14) versorgt; und
eine Leitung (26) zur Verteilung des von dem Wasserentnahmekreislauf (30) entnommenen Wassers, die sich zwischen dem Wasserentnahmekreislauf (30) und dem Stauluftkanal (22) stromaufwärts des Hauptkühltauschers (16) erstreckt, um das von dem Wasserentnahmekreislauf (30) entnommene Wasser, das so genannte Sprühwasser, in den Stauluftstrom des Stauluftkanals (22) sprühen zu können,
**dadurch gekennzeichnet, dass** das System zudem Mittel (40) zum Erwärmen des Sprühwassers umfasst, die zwischen dem Wasserentnahmekreislauf (30) und dem Stauluftkanal (22) stromaufwärts des Hauptkühltauschers (16) angeordnet sind, um die Verdampfung des in den Stauluftkanal (22) gesprühten Wassers zu ermöglichen, was dazu beiträgt, die Stauluft des Primärkreislaufs des Hauptkühltauschers (16) zu kühlen und die Kühlung der Warmluft des Primärkreislaufs des Hauptkühltauschers (16) sicherzustellen.

2. Klimaanlage nach Anspruch 1, **dadurch gekennzeichnet, dass** das Luftturbinentriebwerk (12) ferner mindestens einen Kompressor (13) umfasst, der mechanisch mit der Turbine (14) und dem energieverbrauchenden Rad (18) gekoppelt ist, wobei der Kompressor (13) einen Lufteinlass (13a), der mit der Luftentnahmevorrichtung verbunden ist, und einen Luftauslass (13b) umfasst, der mit dem Hauptkühltauscher (16) verbunden ist, wobei der Primärkreislauf des Hauptkühltauschers mit einem Strom heißer Luft von dem Kompressor (13) versorgt wird.

3. System nach Anspruch 1 oder 2, **dadurch gekennzeichnet, dass** die Mittel (40) zur Erwärmung des aus der Wasserverteilungsleitung (26) kommenden Wassers mindestens einen Wärmetauscher, den so genannten Sprühwärmetauscher, umfassen, der einen kalten Kreislauf, der mit dem aus der Verteilungsleitung kommenden Wasser versorgt wird, und einen heißen Kreislauf (26b) umfasst, der mit einer Quelle für heißes Fluid versorgt wird.

4. System nach Anspruch 3, **dadurch gekennzeichnet, dass** der Kreislauf des heißen Fluids des Sprühwärmetauschers ein Kraftstoffkreislauf, ein Ölkreislauf, ein Kreislauf eines Wärmeübertragungsfluids oder ein Luftkreislauf des Flugzeugs ist.

5. System nach Anspruch 4, wobei der Kreislauf des heißen Fluids des Sprühwärmetauschers ein Luftkreislauf des Flugzeugs ist, **dadurch gekennzeichnet, dass** dieser Luftkreislauf der primäre Luftkreislauf des Hauptkühltauschers ist.

6. System nach einem der Ansprüche 1 bis 5, **dadurch gekennzeichnet, dass** der Sprühwärmetauscher in den Hauptkühltauscher (16) integriert ist.

7. Klimaanlage nach Anspruch 6, **dadurch gekennzeichnet, dass** der Hauptkühltauscher (16) umfasst:
mehrere als Sekundärkanäle (80) bezeichnete Kanäle, die übereinander angeordnet und für die Zirkulation der kalten Luft bestimmt sind und sich jeweils in derselben Richtung, Sekundärrichtung (P) genannt, zwischen einem Lufteinlass, Sekundärlufteinlass (81) genannt, und einem Luftauslass, Sekundärluftauslass (82) genannt, erstrecken;
mehrere als Primärkanäle (60) bezeichnete Kanäle für die Zirkulation der Heißluft, die jeweils zwischen zwei Sekundärkanälen (80) angeordnet sind und sich in der gleichen, als Primärrichtung (P) bezeichneten Richtung, die sich von der Sekundärrichtung unterscheidet, zwischen einem als Primärlufteinlass (61) bezeichneten Lufteinlass und einem als Primärluftauslass (62) bezeichneten Luftauslass erstrecken, um einen Wärmeaustausch zwischen der Primärluft der Primärkanäle (60) und der Sekundärluft der Sekundärkanäle (80) zu ermöglichen;
Wasserzirkulationskanäle (83), die sich jeweils benachbart zu einem Sekundärkanal (80) in der Sekundärrichtung (P) in der Nähe der Primärluftauslässe (62) zwischen einem Wassereinlass (83a), der mit der Wasserverteilungsleitung (26) fluide verbunden ist, und einem Wasserauslass (83b) erstrecken, so dass dieses Wasser durch Wärmeaustausch mit dem Primärluftstrom der Primärkanäle (60) erwärmt werden kann; und
mikroperforierte Wasserstrahl-Hohlstäbe (63), die sich jeweils einem Primärkanal (60) benachbart in der Primärrichtung (P) zwischen einem Wassereinlass (63a), der mit mindestens einem Wasserauslass (83b) der Wasserzirkulationskanäle (83) fluide verbunden ist, und Mikroperforationen (63b) für die Wasserzerstäubung erstrecken, die zu den Sekundärlufteinlässen (81) führen, um die Verdampfung des erhitzten Wassers zu ermöglichen, das am Einlass der Sekundärkanäle (80) zerstäubt wird, was somit zur Kühlung des Sekundärluftstroms am Einlass des Wärmetauschers beiträgt.

8. System nach einem der Ansprüche 1 bis 7, **dadurch gekennzeichnet, dass** der Wasserentnahmekreislauf (30) umfasst:
einen Kondensator (32), der einen primären Luftkreislauf umfasst, dem der Luftstrom am Auslass des Hauptkühltauschers (16) zugeführt wird und der in thermischer Wechselwirkung mit einem sekundären Luftkreislauf steht, dem ein Luftstrom von der Turbine zugeführt wird, um die Kondensation des Luftstroms des primären Kreislaufs zu ermöglichen; und
einen Wasserabzug (33), der am Auslass des Kondensators (32) angeordnet und so ausgelegt ist, dass er das vom Kondensator kondensierte Wasser zurückgewinnen und der Wasserverteilungsleitung (26) zuführen kann.

9. System nach Anspruch 8, **dadurch gekennzeichnet, dass** es außerdem ein Heizgerät (31) umfasst, das einen primären Luftkreislauf umfasst, der von dem primären Luftkreislauf des Hauptkühltauschers (16) versorgt wird und den primären Luftkreislauf des Kondensators (32) versorgt, und das in thermischer Wechselwirkung mit einem sekundären Kreislauf steht, der mit Luft aus der Wasserabzug versorgt wird, so dass die Druckluft, die den primären Kreislauf des Heizgeräts versorgt, erwärmt werden kann.

10. Klimaanlage nach einem der Ansprüche 1 bis 9, **dadurch gekennzeichnet, dass** die Luftentnahmevorrichtung eine Vorrichtung zum Ablassen von Luft aus einem Triebwerk des Flugzeugs oder eine Vorrichtung zum Ablassen von Luft aus einem Hilfsmotor des Flugzeugs ist.

11. Klimaanlage nach einem der Ansprüche 1 bis 10, **dadurch gekennzeichnet, dass** das energieverbrauchende Rad (18) ein Gebläse ist, das dafür ausgelegt ist, Stauluft in dem Stauluft-Zirkulationskanal (22) zirkulieren zu lassen.

12. Lufttransportfahrzeug (8) oder Schienentransportfahrzeug mit einer Kabine (10) und einer Klimaanlage (9) für diese Kabine, **dadurch gekennzeichnet, dass** die Klimaanlage (9) für die Kabine eine Anlage nach einem der Ansprüche 1 bis 11 ist.

## Claims

1. Air conditioning system for a cabin (10) of an aircraft, comprising:
- a device for bleeding air from an air source;
- an air cycle turbine engine (12) comprising at least one turbine (14) and an energy-consuming wheel (18) mechanically coupled to one another, said turbine (14) comprising an air inlet (14a) and an air outlet (14b) that is connected to said cabin (10) in order to be able to supply said cabin with air at a controlled pressure and temperature;
- at least one heat exchanger, referred to as the main cooling exchanger (16), which is arranged in a channel (22) for the circulation of ram air drawn from outside the aircraft, between said air bleed device and said air inlet (14a) of said turbine (14), said main exchanger (16) comprising a primary circuit supplied with a flow of hot air from said air bleed device, and a secondary circuit supplied with said ram air, which forms a flow of cold air for cooling said flow of hot air;
- a water extraction loop (30) that is arranged between said main exchanger (16) and said turbine (14) and is designed to extract water from the flow of hot air cooled by said main exchanger (16) which supplies said turbine (14); and
- a pipe (26) for distributing water extracted by said extraction loop (30), which pipe extends between said water extraction loop (30) and said ram-air channel (22), upstream of said main exchanger (16), in order to be able to spray the water extracted by said water extraction loop (30), referred to as the spray water, into the ram-air flow of said ram-air channel (22), **characterized in that** said system further comprises means (40) for heating the spray water, which means are arranged between said water extraction loop (30) and said ram-air channel (22), upstream of said main cooling exchanger (16), so as to allow evaporation of the water sprayed into said ram-air channel (22), which helps to cool the ram air of said primary circuit of the main exchanger (16) and to ensure cooling of the hot air of said primary circuit of said main exchanger (16).

2. Air conditioning system according to claim 1, **characterized in that** said air cycle turbine engine (12) further comprises at least one compressor (13) mechanically coupled to said turbine (14) and to said energy-consuming wheel (18), said compressor (13) comprising an air inlet (13a) connected to said air bleed device, and an air outlet (13b) connected to said main cooling exchanger (16), said primary circuit of said main exchanger being supplied with a flow of hot air from said compressor (13).

3. System according to either claim 1 or claim 2, **characterized in that** said means (40) for heating the water from said water distribution pipe (26) comprise at least one heat exchanger, referred to as the spray exchanger, comprising a cold circuit supplied with said water from said distribution pipe, and a hot circuit (26b) supplied with a source of hot fluid.

4. System according to claim 3, **characterized in that** said hot fluid circuit of said spray exchanger is a fuel circuit, an oil circuit, a circuit of a heat transfer fluid or an air circuit of the aircraft.

5. System according to claim 4, wherein said hot fluid circuit of said spray exchanger is an air circuit of the aircraft, **characterized in that** this air circuit is the primary air circuit of said main exchanger.

6. System according to any of claims 1 to 5, **characterized in that** said spray exchanger is integrated within said main cooling exchanger (16).

7. Air conditioning system according to claim 6, **characterized in that** said main cooling exchanger (16) comprises:
- a plurality of channels, referred to as secondary channels (80), placed one on top of the other and intended for the circulation of said cold air, each extending in the same direction, referred to as the secondary direction (P), between an air inlet, referred to as the secondary air inlet (81), and an air outlet, referred to as the secondary air outlet (82);
- a plurality of channels, referred to as primary channels (60), for the circulation of said hot air, each interposed between two secondary channels (80) and extending in the same direction, referred to as the primary direction (P), which is different from said secondary direction, between an air inlet, referred to as the primary air inlet (61), and an air outlet, referred to as the primary air outlet (62), so as to allow heat exchanges between the primary air of said primary channels (60) and the secondary air of said secondary channels (80);
- water circulation channels (83), each extending adjacently to a secondary channel (80) in said secondary direction (P) in the vicinity of the primary air outlets (62), between a water inlet (83a), which is fluidically connected to said water distribution pipe (26), and a water outlet (83b), so as to allow this water to be heated by heat exchanges with said primary air flow of said primary channels (60); and
- water-spray micro-perforated hollow bars (63), each extending adjacently to a primary channel (60) in said primary direction (P), between a water inlet (63a), which is fluidically connected to at least one water outlet (83b) of said water circulation channels (83), and water-spray micro-perforations (63b) leading toward the secondary air inlets (81), so as to allow evaporation of the heated water sprayed at the inlet of said secondary channels (80), which thus helps to cool the secondary air flow at the inlet of the exchanger.

8. System according to any of claims 1 to 7, **characterized in that** said water extraction loop (30) comprises:
- a condenser (32) comprising a primary air circuit supplied with the air flow at the outlet of said main cooling exchanger (16), in thermal interaction with a secondary air circuit supplied with an air flow from said turbine, to allow condensation of said air flow of said primary circuit; and
- a water extractor (33) that is arranged at the outlet of said condenser (32) and is designed to be able to recover the water condensed by the condenser and to feed said water to said water distribution pipe (26).

9. System according to claim 8, **characterized in that** it further comprises a heater (31) comprising a primary air circuit supplied by said primary air circuit of said main cooling exchanger (16) and supplying said primary air circuit of said condenser (32), in thermal interaction with a secondary circuit supplied with air from said water extractor so as to allow the compressed air supplying the primary circuit of said heater to be heated.

10. Air conditioning system according to any of claims 1 to 9, **characterized in that** said air bleed device is a device for bleeding air from a propulsion engine of the aircraft or a device for bleeding air from an auxiliary engine of the aircraft.

11. Air conditioning system according to any of claims 1 to 10, **characterized in that** said energy-consuming wheel (18) is a fan designed to allow ram air to circulate in said ram-air circulation channel (22).

12. Air transport vehicle (8) or rail transport vehicle comprising a cabin (10) and an air conditioning system (9) for this cabin, **characterized in that** said air conditioning system (9) for the cabin is a system according to any of claims 1 to 11.
